# EUROPÄISCHE PATENTSCHRIFT

(11) **EP 2 421 758 B1**
(45) Veröffentlichungstag und Bekanntmachung des Hinweises auf die Patenterteilung: **25.02.2015**
(21) Anmeldenummer: 10719254.4
(22) Anmeldetag: 21.04.2010
(51) Int. Cl.: B65B 1/28, B65G 69/18, B65D 33/25

(54) **UMWELTDICHTE ANDOCKEINRICHTUNG UND -VERFAHREN MIT REISSVERSCHLUSS UND SCHIEBER**
DOCKING DEVICE SEALED AGAINST THE ENVIRONMENT AND DOCKING METHOD, COMPRISING A ZIPPER AND A SLIDER
PROCÉDÉ ET DISPOSITIF DE JONCTION, ÉTANCHE À L'ENVIRONNEMENT, PRÉSENTANT UNE FERMETURE À GLISSIÈRE ET UN COULISSEAU

(30) Priorität: 24.04.2009 DE 102009018565
(43) Veröffentlichungstag der Anmeldung: 29.02.2012
(73) Patentinhaber: FLECOTEC AG, 79379 Müllheim (DE)
(72) Erfinder: UNTCH, Günter, 79379 Müllheim (DE)
(74) Vertreter: Bartels & Partner
(86) Internationale Anmeldenummer: PCT/EP2010/002433
(87) Internationale Veröffentlichungsnummer: WO 2010/121793

(56) Entgegenhaltungen:
- WO-A1-2005/070776
- WO-A2-2005/012104
- DE-U1- 8 910 950
- US-A- 5 211 482

## Beschreibung

Die Erfindung betrifft einen Verschluss mit zwei Profilleisten für ein mindestens teilweise flexibles Gebinde gemäß den Merkmalen des Anspruchs 1, einen Schieber für einen derartigen Verschluss mit den Merkmalen des Anspruchs 8 sowie ein Verfahren zum umweltdichten Verbinden zweier mindestens teilweise flexibler Gebinde mit den Merkmalen des Anspruchs 12.

Flüssige oder feste Schüttgüter werden oftmals in Gebinden gefasst. Bei den Gebinden kann es sich um mindestens teilweise flexibel ausgebildete Gebinde handeln. Solche Gebinde sind beispielsweise als Säcke, die in Containern eingehangen sind, erhältlich. Die Gebinde werden bevorzugt aus Endlosschläuchen hergestellt und auf unterschiedliche Art und Weise als Schlauchabschnitte verschlossen. Besonders häufig werden solche Gebinde zum Verpacken, Transportieren oder Lagern flüssiger oder fester Schüttgüter verwendet.

Das Entleeren, Befüllen oder Umfüllen solcher Gebinde gestaltet sich in der Praxis oft schwierig oder gar riskant. Insbesondere dann, wenn es sich bei den Schüttgütern der Gebinde um gefährliche oder empfindliche Stoffe handelt, sind unbedingt Kontaminationen des Schüttguts wie auch Kontaminationen der Umgebung mit Schüttgut zu vermeiden. Dazu müssten sämtliche Verschlüsse und Verbindungen, insbesondere zum Andocken solcher Gebinde, möglichst umweltdicht ausgeführt sein. Vor dem Hintergrund dieser Problematik sind besondere Verschlüsse für eingangs beschriebene Gebinde entwickelt worden, die dabei unterstützen sollen, im jeweiligen Fall Kontaminationen zu verhindern.

Solche Verschlüsse sind beispielsweise der DE 10 2004 003 511 B4 zu entnehmen. Dieses Dokument offenbart ferner Schieber für Mehrfachandockeinrichtungen. Hinsichtlich der Stabilität der Verbindungen sind solche Verschlüsse oftmals jedoch nicht ausreichend sicher.

Dokument WO 2005/012104 A2 offenbart einen Verschluss gemäß dem Oberbegriff des Anspruchs 1. Dieses Dokument weist Verschlusselemente in der Durchflussrichtung, sowie eine angelenkte dritte Profilleiste die über das jeweilige Gebinde hinaus erstreckt.

Der Erfindung liegt das Problem zugrunde, einen einfach handhabbaren Verschluss für eingangs erwähnte Gebinde zu schaffen, der ein umweltdichtes Verbinden solcher Gebinde miteinander oder mit anderen verfahrenstechnischen Einrichtungen sowie ein umweltdichtes Führen eines Durchflusses zwischen miteinander verbundenen Gebinden oder den verbundenen Einrichtungen ermöglicht. Dieser Verschluss soll darüber hinaus nach Möglichkeit universell an einem mindestens teilweise flexiblen Gebinde einsetzbar sein, auch ohne dass der Verschluss Teil des Gebindes sein muss. Zwischen den Gebinden sollen solche Verschlüsse eine möglichst feste Verbindung herstellen können, die insbesondere bei Kraftstößen in Durchflussrichtung nicht abreißt.

Dieses Problem wird erfindungsgemäß gelöst durch einen Verschluss mit zwei Profilleisten für ein mindestens teilweise flexibles Gebinde mit den Merkmalen des Anspruchs 1, durch einen Schieber hierfür mit den Merkmalen des Anspruchs 8 sowie ein Verfahren gemäß Anspruch 12.

Vorteilhafte Ausführungen der Erfindung sind in den Unteransprüchen angegeben.

Die Erfindung ermöglicht ein umweltdichtes Verbinden eines ersten Gebindes mit einem zweiten Gebinde, sodass eine ge-schlossene Andockposition einnehmbar ist. Aus der geschlossenen Andockposition heraus wird durch Umschalten in eine geöffnete Andockposition ein umweltdichtes Führen eines Durchflusses in einer Durchflussrichtung durch den Verschluss von dem ersten Gebinde in das zweite Gebinde hinein gewährleistet.

Erfindungsgemäß weist das zweite Gebinde dem ersten Gebinde zugewandt einen identischen Verschluss auf, der zum Erreichen der geschlossenen Andockposition in Eingriff mit dem Verschluss des ersten Gebindes bringbar ist. Nach dem Umschalten in die geöffnete Andockposition bilden die verbundenen Verschlüsse der Gebinde einen Kanal für den Durchfluss des Schüttgutes in der Durchflussrichtung aus.

In der geschlossenen Andockposition verschließen die einander gegenüber angeordneten Profilleisten eines der Gebinde zwischeneinander. Die Profilleisten weisen quer zu der Durchflussrichtung kanaleinwärts und teilweise auch kanalauswärts ausgerichtete Verschlusselemente auf.

Eine erste Profilleiste des Verschlusses des ersten Gebindes erstreckt sich in der Durchflussrichtung über das Gebinde hinaus und ist auf einer dem Gebinde zugewandten Innenseite mit mindestens einem ersten und einem zweiten Verschlusselement ausgebildet. Sämtliche Verschlusselemente sind für ein Wirken quer zu der Durchflussrichtung kanaleinwärts, d. h. ebenfalls quer zu der Durchflussrichtung ausgerichtet angeordnet.

Eine zweite Profilleiste des Verschlusses des ersten Gebindes ist auf einer dem Gebinde zugewandten zweiten Innenseite mit mindestens einem dritten Verschlusselement ausgebildet. Auch das mindestens eine dritte Verschlusselement ist quer zu der Durchflussrichtung kanaleinwärts ausgerichtet angeordnet, um quer zu der Durchflussrichtung wirken zu können. Auf einer dem Gebinde abgewandten Außenseite der zweiten Profilleiste ist zusätzlich quer zu der Durchflussrichtung kanalauswärts wirkend mindestens ein viertes Verschlusselement ausgebildet, wobei sämtliche vierte Verschlusselemente ausschließlich quer zur Durchflussrichtung ausgerichtet angeordnet sind.

Die Innenseite der ersten Profilleiste weist in der Durchflussrichtung einen ersten Kontaktbereich und einen zweiten Kontaktbereich auf. In dem ersten Kontaktbereich verschließen das zweite Verschlusselement der ersten Profilleiste und das dritte Verschlusselement der zweiten Profilleiste das erste Gebinde, indem das zweite Verschlusselement und das dritte Verschlusselement ineinander greifen. Der zweite Kontaktbereich der ersten Profilleiste erstreckt sich in Durchflussrichtung über das erste Gebinde und die gegenüberliegende zweite Profilleiste hinaus. In dem zweiten Kontaktbereich ist der Verschluss des ersten Gebindes mit dem identischen Verschluss des zweiten Gebindes verbindbar. Dazu greifen das erste Verschlusselement der ersten Profilleiste des identischen Verschlusses des zweiten Gebindes und das vierte Verschlusselement der Außenseite der zweiten Profilleiste des Verschlusses des ersten Gebindes ineinander ein. Ebenso ist selbstverständlich ein Eingriff der jeweils anderen ersten und vierten Verschlusselemente vorgesehen.

Vorteilhafte Ausführungsformen weisen entweder einen Aktuator oder einen Schieber zum Überführen des Verschlusses bzw. der angedockten Verschlüsse von der geschlossenen Andockposition in die geöffnete Andockposition auf.

Vorteilhafte Ausführungsformen der identischen Verschlüsse sind als universelle Verschlüsse ausgebildet. Diese Verschlüsse zweier innerhalb gewisser Grenzen verschiedenartig beschaffener Gebinde sind dann miteinander verbindbar, sodass dabei sichere, umweltdichte Verbindungen zwischen den Profilleisten der Verschlüsse entstehen.

Dazu sind sämtliche Verschlusselemente der Profilleisten quer zur Strömungsrichtung kanaleinwärts oder kanalauswärts ausgerichtet, sodass Belastungen in Durchflussrichtung mit erhöhter Sicherheit kompensiert werden können. In Durchflussrichtung kommt es beispielsweise beim Umfüllen eines Schüttgutes von dem ersten Gebinde in das zweite Gebinde zu Kraftstößen auf die Verschlüsse, wenn das Schüttgut auf den Boden des zweiten Gebindes fällt. Die ausschließlich quer zur Durchflussrichtung angeordneten Verschlusselemente halten solchen Kraftstößen in Durchflussrichtung stand, da sie ein Abschälen der Profilleisten effektiv verhindern.

Diese Verbindungen lösen sich kontrolliert, insbesondere mittels des Aktuators oder mittels des Schiebers, entweder zwischen den Verschlussleisten eines Verschlusses oder zwischen den Verschlussleisten zweier Verschlüsse, sodass ein unkontrolliertes Öffnen der Gebinde vermieden ist. Die vorteilhaften Ausführungsformen mit Aktuator bzw. Schieber können sowohl von Hand als auch in automatisierten Andockvorrichtungen betätigt werden.

Vorteilhafterweise können die Gebinde mit identisch ausgebildeten Verschlüssen seitlich aneinander angedrückt werden, um die umweltdichten Verbindungen der Profilleisten miteinander herzustellen. Das seitliche Aneinanderdrücken führt sowohl beim Verschließen eines Gebindes mit dem Verschluss zu einer sicheren Verbindung als auch beim seitlichen Andrücken des identischen Verschlusses an den Verschluss, um einen Durchfluss zwischen zwei Gebinden herzustellen. In diesem Falle wird auch vom Andocken zweier Gebinde aneinander gesprochen.

Das seitliche Andocken hat für den Anwender über die Festigkeit der Verbindung hinausgehend den praktischen Vorteil, dass ein seitliches Anordnen der Gebinde zueinander wesentlich komfortabler umsetzbar ist. Beispielsweise kann ein leeres Gebinde ohne Weiteres an ein volles Gebinde herangefahren werden. Um die Gebinde aneinander anzudocken, muss nun keines der Gebinde vertikal verfahren werden, da das Andocken seitlich vorgesehen ist.

Ein Vorteil der Anordnung von ausschließlich quer zur Durchflussrichtung ausgerichteten Verschlusselementen, seien sie positiv oder negativ gestaltet, besteht in einer damit erreichten rastfreundlichen Lage der Verschlusselemente. Sämtliche Verschlusselemente, die während dem Verschließen miteinander in Eingriff zu bringen sind, sind quer zur Durchflussrichtung kanaleinwärts oder kanalauswärts ausgerichtet.

Die Profilleisten werden beim Verschließen in einer Ebene bewegt bzw. gebogen, die etwa senkrecht zur Durchflussrichtung aufgespannt ist. In dieser Ebene lassen sich die Profilleisten leicht verbiegen, ähnlich einem Gürtel, der um einen Körper gewunden ist. Die Profilleisten haben ähnlich dem Gürtel jeweils gegenüberliegend zwei breite und zwei schmale Seiten. Die Profilleisten werden somit während des Ineinandergreifens der Verschlusselemente um ihre breiten Seiten verbogen. Der Gürtel liegt im Vergleich dazu ebenfalls nicht mit den schmalen Seiten an dem Körper an, da er sich so nicht um den Körper schlingen lassen würde. Wäre ein Verschlusselement, das in Eingriff zu bringen ist, in Durchflussrichtung ausgerichtet, beispielsweise an einer der kurzen Seiten befestigt, müssten sich die Profilleisten in einer Ebene parallel zur Durchflussrichtung bewegen. In einer solchen Ebene neigen die Profilleisten jedoch schnell zum Knicken, da sie in dieser Ebene steif ausgebildet sind.

In einer vorteilhaften Ausführungsform sind die Innenseiten und die Außenseiten als Kontaktflächen formkomplementär zueinander ausgebildet. Dies kann den Verschluss hinsichtlich der Dichtheit weiter verbessern.

In vorteilhaften Ausführungsformen greifen die Verschlusselemente in der Art einer Nut-Feder-Verbindung und/oder einer Verhakungsverbindung ineinander. Besonders vorteilhaft ist eine Kombination dieser Verbindungstypen in Gestalt einer verhakenden Nut-Feder-Verbindung. Dabei kann die Feder in der Nut verhakt werden. Bei Auslenkung der Feder und Rückzug aus einem entsprechenden Rücksprung in der Nut ist die Verhakung gelöst.

Eine Ausbildung der Verschlusselemente für das Zusammenwirken in einer Nut-Feder-Verbindung ist vorteilhaft, weil ein entsprechendes Extrudieren der Profilleisten als Kunststoffleisten in besonders günstigen Formgeometrien abbildbar ist. Die derart ausgebildeten Verschlusselemente verschließen außerdem wegen üblicherweise geringen Wandstärken der Gebinde dieselben besonders gut in der Nut-Feder-Verbindung. Die Nut-Feder-Verbindung sind darüber hinaus für den Anwender besonders gut einsehbar, sodass schnell kontrolliert werden kann, ob Verschmutzungen vorliegen, die ein sicheres Andocken gefährden würden.

Neben der Nut-Feder-Verbindung oder innerhalb dieser Verbindungsgattung sind auch andere Arten von Verschlusselementen denkbar. Beispielsweise können Verschlusselemente quer zur Durchflussrichtung ineinander eingreifen, indem sie ineinander verhaken.

Gemäß einer vorteilhaften Ausführungsform greift ein Verschlusselement in das andere ein, ohne dass ein Verschlusselement in der Art einer Nut-Feder-Verbindung in einem weiteren Verschlusselement versinkt. Ein solcher Eingriff ist gemäß dieser Ausführungsform mit J-förmigen Verschlusselementen als reine Verhakungsverbindung ausgeführt, wobei der gestreckte Schenkel des J's an der Profilleiste befestigt und der gebogene Boden J's für den Eingriff mit einem weiteren derart ausgebildeten Verschlusselement zur entsprechenden Profilleiste weist.

Solche Ausführungsformen von Verschlusselementen sind besonders robust und standfest gegenüber Mehrfachbeanspruchungen und verhaken darüber hinaus sicher, bis sie aus der Verhakung gelöst werden. Dazu können sie parallel zur Durchflussrichtung von den Profilleisten abgewinkelt bzw. ausgelenkt werden.

Verhakungsverbindungen sind außerdem vorteilhaft, weil sie selektiv einsetzbar sind, je nach ihrer Ausrichtung. Die Ausrichtung bestimmt die Kraftrichtung, in der die Verbindung die höchste Festigkeit hat. Werden Verschlusselemente einer Verhakungsverbindung beispielsweise in unterschiedlichen Richtungen ausgerichtet, insbesondere in Winkeln leicht schräg zu einer Ebene, die senkrecht zur Durchflussrichtung aufgespannt ist, können die Verschlüsse hinsichtlich entsprechenden Lastfällen optimiert werden.

In einer besonders vorteilhaften Ausführungsform ist der Aktuator von außen betätigbar ausgebildet. Eine sichere Betätigung von außen ist von besonderem Vorteil, weil es sich bei den von den Gebinden gefassten Schüttgütern um gefährliche Stoffe handeln kann, mit denen die Umgebung der Gebinde nicht kontaminiert werden darf. Eine Betätigung von außen ermöglicht außerdem besonders leicht ein manuelles Verfahren oder eine Automatisierung eines Andockverfahrens.

In einer besonders vorteilhaften Ausführungsform bewirkt der Aktuator eine Bewegung mindestes eines der Verschlusselemente, sodass das Ineinandergreifen in ein weiteres der Verschlusselemente gelöst ist.

Das gezielte Bewegen einzelner Verschlusselemente sorgt für ein besonders sicheres und kontrolliertes Öffnen der Verschlüsse.

Nach einer vorteilhaften Ausführungsform bewirkt der Aktuator eine Bewegung des zweiten Verschlusselements und/oder des dritten Verschlusselements, sodass das Ineinandergreifen in das zugeordnete Verschlusselement gelöst ist, während das Ineinandergreifen des ersten Verschlusselements des Verschlusses des ersten Gebindes in das vierte Verschlusselement des Verschlusses des zweiten Gebindes bestehen bleibt.

Ein solcher Aktuator kann beispielsweise einem zu betätigenden Befestigungselement abgewandt auf der Profilleiste als ein Schwalbenschwanz angeordnet sein, der für eine Betätigung mit seinen als Griffelemente ausgebildeten Schwalbenschwanzenden zusammenzudrücken ist.

Mit dieser vorteilhaften Ausführungsform ist ein präzise kontrolliertes Lösen der Verbindungen zwischen ausgewählten Verschlusselementen zum Erreichen einer geöffneten Andockposition durch den Aktuator auslösbar. Ein solcher Aktuator kann besonders leicht und dennoch sicher zu Bedienen sein, sodass beim Andocken kein Risiko für den Inhalt der Gebinde und kein Risiko für den Anwender entsteht.

Erfindungsgemäße Verschlüsse bieten die Möglichkeit, die Profilleisten der Verschlüsse von Hand ineinander zu drücken bzw. miteinander zu verschließen. Beispielsweise außen an den Profilleisten angeordnete Aktuatoren sind vorzugsweise als Laschen ausgebildet. Ein seitliches Ziehen an einer solchen Lasche bewirkt beispielsweise das kontrollierte Öffnen der Gebinde zueinander zum Erreichen der geöffneten Andockposition. Ein seitlicher Zug an einer weiteren Lasche bewirkt beispielsweise ein Trennen der Verbindungen der Verschlüsse zweier Gebinde zueinander, in der Regel nachdem die Gebinde wieder für sich gesehen verschlossen sind.

Es sind dazu vorzugsweise vorangehend beschriebene J-förmige Verschlusselemente verwendet, die nur bei Kraftbeaufschlagung in einer kritischen Richtung dadurch öffnen, dass das Hintergreifen der Verschlusselemente gelöst wird, weil die Verschlusselemente abgewinkelt werden. In einer anderen Richtung blockieren sie die Verrastungsprofile. Dabei wird darauf geachtet, dass eine Kraftbeaufschlagung in einer kritischen Richtung quer zur Durchlaufrichtung nicht bei üblichen Belastungszuständen auftritt, beispielsweise beim Transport. Beispielsweise kann durch den Gewichtsdruck des Schüttgutes im Gebinde auch ein seitlicher Zug quer zur Durchströmrichtung auf die Verrastungsprofile wirken, der den Verschluss jedoch nicht öffnen darf.

In einer vorteilhaften Ausführungsform ist zur Betätigung des Aktuators ein Schieber verwendet, der über die Breite der Gebinde hinweg quer zu der Durchströmrichtung verschiebbar ist.

Er bewegt sich auf den Profilleisten und greift vorteilhaft in die auch für den Handbetrieb vorgesehenen Aktuatoren ein und betätigt diese gezielt zum Lösen der Verbindungen zwischen ausgewählten Verschlusselementen, je nach Wunsch des Anwenders. Der Schieber dient, in der anderen Richtung verschoben, auch dem Verschließen des jeweiligen Gebindes.

Solche Schieber erhöhen weiterhin den Grad der Sicherheit des kontrollierten Verschließens und Öffnens der Gebinde.

Vorteilhaft ist ein Schieber zum Aufschieben auf den Verschluss mit einem U-förmigen Querschnitt quer zu einer Schiebeachse vorgesehen. Der U-förmige Querschnitt weist eine Basis, einen ersten und einen zweiten Schenkel auf. Die Schenkel erstrecken sich in Durchflussrichtung etwa parallel zu den Profilleisten des Verschlusses. Dabei ist der erste Schenkel dem zweiten Gebinde abgewandt mit einem Griffabschnitt und der zweite Schenkel dem zweiten Gebinde zugewandt mit einem Verbindungselement und einer Verbindungselementaufnahme ausgebildet. Die Schiebeachse verläuft etwa senkrecht zu dem U-förmigen Querschnitt in der Richtung durch den Schieber hindurch, in der der Schieber auf den Profilleisten verschiebbar ist. Zwischen den Schenkeln ist etwa parallel zu der Schiebeachse eine Klinge an der Basis angeordnet.

Ein solcher Schieber ist vorteilhaft für das Zusammenwirken mit einem weiteren Schieber eines weiteren Verschlusses ausgebildet, indem der Schieber mit dem Verbindungselement und der Verbindungselementaufnahme eine Schnittstelle zu dem weiteren Schieber aufweist, sodass ein kontrolliertes Verbinden der Gebinde noch sicherer gestaltet ist.

In einer vorteilhaften Ausführungsform des Schiebers weist der erste Schenkel entlang der Schiebeachse ein schmales Tauchende und ein dem gegenüber breites Kanalende auf.

Eine solche Form des Schiebers begünstigt vorteilhaft das Andocken der Verschlüsse aneinander, da der Schenkel für das Eintauchen in miteinander verschlossene Profilleisten eines Verschlusses mit der Tauchseite und der für das kontrollierte Auseinanderhalten der durch das Verschieben des Schiebers voneinander getrennten Profilleisten mit dem Kanalende optimiert ist.

In einer vorteilhaften Ausführungsform des Schiebers ist die Basis dem Griffabschnitt abgewandt schräg zur Schiebeachse parallel zur Durchflussöffnung mit einer stufenförmigen Wand ausgebildet. Die Wand geht in den ersten Schenkel über, sodass der erste Schenkel in Richtung der Schiebeachse kürzer ist als der zweite Schenkel.

Die Form der Basis ist derart ausgebildet, dass die Schnittstelle des Schiebers zu dem weiteren Schieber des weiteren Verschlusses bei Betrachtung des U-förmigen Querschnittes außen an dem ersten Schenkel angeordnet ist. Der erste Schenkel wird bei erfindungsgemäßer Verwendung von dem weiteren Schieber unterstützt und kann deshalb selbst materialsparend in der hier beschriebenen Art und Weise kürzer und darüber hinaus schmäler gestaltet sein. Die gestufte Schräge, ausgebildet von der Basis und dem erstem Schenkel, und eine parallel dazu ausgeführte Schräge auf einer Innenseite des zweiten Schenkels - bei Betrachtung des U-förmigen Querschnitts - erleichtern das erstmalige Ineinanderdrücken der Profilleisten durch den Schieber, da die Profilleisten freiliegend auf der Seite des schmalen Endes in den Schieber eingeführt werden können. Im Zug des Ineinanderdrückens wird der steigenden Belastung des Schiebers Rechnung tragend dessen Materialstärke immer größer, sodass mit der schrägen Ausgestaltung des Schiebers Materialeinsparungen erzielt sind.

In einer vorteilhaften Ausführungsform des Schiebers weist der Schieber ein Messer auf, vorzugsweise an der Klinge. Mit dem Messer können Säcke beim Verschieben des Schiebers gleichzeitig aufgetrennt werden, wenn beispielsweise nicht allein mittels des Verschlusses eine vollständig geöffnete Andockposition zu erreichen ist.

Der Schieber einer vorteilhaften Ausführungsform des alternativen Verschlusses ist als Schieber (51, 53) nach einem der Ansprüche 8 bis 11 ausgebildet.

Insbesondere die Integration eines Messers in einen Schieber, der gemeinsam mit dem Verschluss an eines der Gebinde angeklebt wird, ist besonders dann von Vorteil, wenn bereits gefüllte Gebinde anzudocken sind, ohne dass es zu Kontaminationen kommen darf.

Besonders vorteilhaft wird der Verschluss gemäß der in Anspruch 1 genannten ersten Alternative des Erfindungsgegenstandes mittels eines Verfahrens erfindungsgemäß verwendet, aufweisend mindestens die Verfahrensschritte:
a. Verschließen der Gebinde mit je einem Verschluss gemäß Anspruch 1,
b. Verbinden der Verschlüsse durch seitlichen Druck der Verschlüsse aneinander, sodass entsprechende Verschlusselemente ineinander eingreifen, und
c. Betätigen ein Aktuators zum Umschalten von einer geschlossenen Andockposition in eine geöffnete Andockposition.

Ein solcher Ablauf eines erfindungsgemäßen Verfahrens stellt die sichere Verwendung erfindungsgemäßer Verschlüsse sicher.

Die Erfindung wird anhand der nachfolgenden Figuren ausführlich erläutert.

Es zeigen:
- Fig. 1: eine schematische Darstellung eines Schnittes durch ein erstes Ausführungsbeispiel eines erfindungsgemäßen Verschlusses, wobei zwei Gebinde mit je einem Verschluss jeweils für sich verschlossen sind, ohne dass die Verschlüsse miteinander verbunden sind,
- Fig. 2: eine schematische Darstellung eines Schnittes durch ein zweites Ausführungsbeispiel eines Verschlusses, wobei ein Gebinde mit dem Verschluss verschlossen dargestellt ist,
- Fig. 3: eine schematische Darstellung eines Schnittes durch ein drittes Ausführungsbeispiels eines Verschlusses, wobei ein Gebinde mit dem Verschluss ein verschlossen dargestellt ist,
- Fig. 4: eine schematische Darstellung eines Schnittes durch zwei Verschlüsse gemäß Figur 3, die jeweils ein Gebinde verschließen, wobei die Verschlüsse miteinander verbunden sind, sodass eine geschlossene Andockposition dargestellt ist,
- Fig. 5: eine schematische Darstellung eines Schnittes durch die Verschlüsse aus Figur 4, durch die ein Durchfluss aus dem ersten in das zweite Gebinde strömen kann, sodass eine geöffnete Andockposition dargestellt ist,
- Fig. 6: eine perspektivische Darstellung zweier durch zwei miteinander verbundene Schieber in eine geöffnete Andockposition überführte Verschlüsse nach einem vierten Ausführungsbeispiel,
- Fig. 7: eine perspektivische Ansicht des vierten Ausführungsbeispiels gemäß Figur 6, wobei nur ein Verschluss mit dem zugehörigen Schieber dargestellt ist,
- Fig. 8: eine weitere perspektivische Ansicht des Verschlusses mit dem Schieber gemäß Figur 7 nach Drehung um 180°,
- Fig. 9: eine perspektivische Ansicht des Verschlusses mit dem Schieber, wobei der Schieber in einer Position an einem Ende des Verschlusses dargestellt ist, nach dem der Schieber entlang der Schiebeachse zum Erreichen der geöffneten Andockposition an dieses Ende geschoben worden ist,
- Fig. 10: einen Schnitt durch den Verschluss gemäß den Figuren 6 bis 9 ohne Schieber mit ineinander eingreifenden Profilleisten,
- Fig. 11: einen Schnitt durch zwei Verschlüsse gemäß dem vierten Ausführungsbeispiel der Figuren 6 bis 10 in einer geöffneten Andockposition, wobei die durch den Aktuator auslösbare Bewegung der Verschlusselemente durch doppelte Bogenlinien an Verschlusselementen verdeutlicht ist,
- Fig. 12: eine perspektivische Darstellung gemäß Figur 9 in Durchflussrichtung gesehen,
- Fig. 13: eine perspektivische Darstellung zweier mit Verschlüssen gemäß dem vierten Ausführungsbeispiel verschlossener Gebinde, die für ein seitliches Aneinanderdrücken mittels zweier Schieber vorbereitet sind,
- Fig. 14: eine perspektivische Darstellung zweier Gebinde mit Verschlüssen gemäß Figur 13, wobei die Schieber miteinander verbunden sind,
- Fig. 15: eine perspektivische Darstellung gemäß Figur 14, wobei die Schieber entlang der Schiebeachse etwa bis zur Mitte der Profilleisten verschoben ist, sodass eine bereits teilweise geöffnete Andockposition dargestellt ist,
- Fig. 16: eine perspektivische Darstellung der Gebinde aus Figur 14, wobei die Schieber über die gesamte Breite der Gebinde entlang der Schiebeachse verschoben sind, sodass der zwischen den Gebinden durch die Verschlüsse geschaffene Kanal sich nahezu über die gesamte Breite der Gebinde erstreckt,
- Fig. 17: einen Schnitt durch eine weitere Variante des Verschlusses aus Figur 10 mit einem zwischen einer der Profilleisten und Verschlusselementen der Profilleiste angeordneten Filmscharnier,
- Fig. 18: einen Schnitt durch eine weitere Variante des Verschlusses aus Figur 10 mit Griffelementen zur manuellen Betätigung des Aktuators, wobei zwei Gebinde mit je einem solchen Verschluss jeweils für sich verschlossen sind, ohne dass die Verschlüsse miteinander verbunden sind,
- Fig. 19: einen Schnitt durch die Verschlüsse aus Fig. 18, wobei die Verschlüsse miteinander in der geschlossenen Andockposition verbunden sind,
- Fig. 20: einen Schnitt durch die Verschlüsse aus Fig. 19 mit manuell betätigten Aktuatoren und
- Fig. 21: einen Schnitt durch die Verschlüsse aus Fig. 19 nach dem Umschalten in die geöffnete Andockposition.

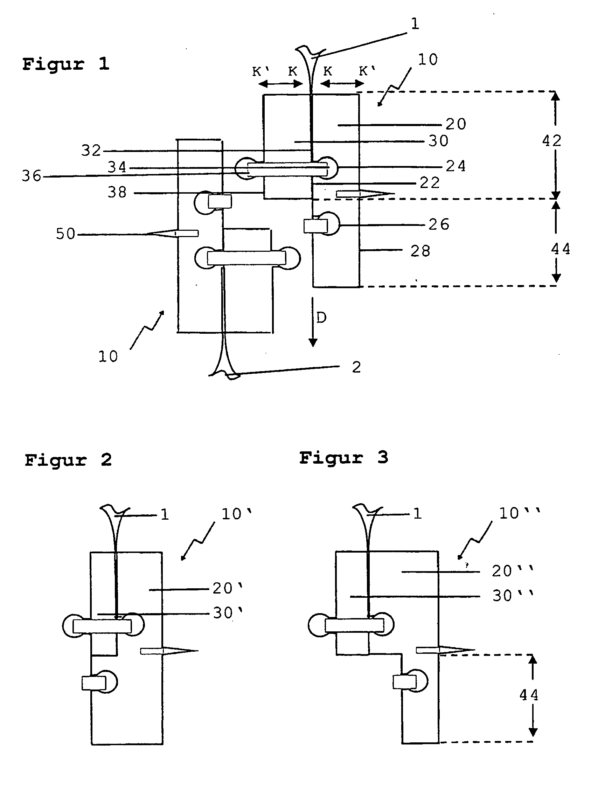

Ein erstes Ausführungsbeispiel eines erfindungsgemäßen Verschlusses ist in Figur 1 schematisch dargestellt. Zwei identische Verschlüsse 10 sind einander gegenüber leicht seitlich angeordnet, sodass die mittels der Verschlüsse 10 jeweils verschlossenen Gebinde 1, 2 voneinander weg weisen.

Der Verschluss 10 ist zum umweltdichten Verbinden des ersten Gebindes 1 mit einem zweiten Gebinde 2 ausgebildet. Dies kann durch ein Andocken des Verschlusses 10 an dem zweiten Verschluss 10, der identisch ausgebildet ist, geschehen. Aneinander angedockt können die Verschlüsse 10 in Bezug zu den Gebinden 1, 2 geöffnet werden, sodass ein Durchfluss zwischen ihnen in einer Durchflussrichtung D umweltdicht geführt wird. In Figur 1 sind die Verschlüsse 10 nicht aneinander angedockt, es kommt somit noch zu keinem Durchfluss in der Durchflussrichtung D.

Der erfindungsgemäße Verschluss 10 gemäß dem ersten Ausführungsbeispiel weist eine erste Profilleiste 20 und eine zweite Profilleiste 30 auf. Die Profilleisten 20, 30 sind parallel zu einem Ende des Gebindes 1, dessen Wandungen umschließend, parallel zueinander angeordnet.

Die erste Profilleiste 20 ist in Durchflussrichtung D länger als die zweite Profilleiste 30 ausgebildet. In einem ersten Kontaktbereich 42 sind die Profilleisten einander gegenüberliegend angeordnet, wobei sie dort das Gebinde 1 zwischen sich einschließen. Mit einem zweiten Kontaktbereich 44 erstreckt sich die erste Profilleiste 20 in Durchflussrichtung D über die zweite Profilleiste 30 hinaus.

Die erste Profilleiste 20 weist auf einer dem Gebinde 1 zugewandten ersten Innenseite 22 ein erstes und ein zweites Verschlusselement 24, 26 auf. Dabei sind die Verschlusselemente 24, 26 quer zu der Durchflussrichtung D für ein Zusammenwirken mit gegenüberliegenden Verschlusselementen, die ebenfalls quer zu der Durchflussrichtung D ausgerichtet sind, vorgesehen.

Die zweite Profilleiste 30 weist auf einer dem Gebinde 1 zugewandten zweiten Innenseite 32 ein drittes Verschlusselement 34 auf, das quer zu der Durchflussrichtung D ausgerichtet ist.

Auf einer dem Gebinde 1 abgewandten Außenseite 38 ist ebenfalls quer zu der Durchflussrichtung D, allerdings nach außen weisend, ein viertes Verschlusselement 36 ausgebildet.

Die Innenseiten 22, 32 und die Außenseite 38 sind als Kontakt-' flächen zueinander ausgebildet.

In dem ersten Kontaktbereich 42 ist somit eine Verbindung zwischen dem zweiten und dem dritten Verschlusselement 24, 34 hergestellt, sodass das erste Gebinde 1 darin verschlossen ist. Dabei greifen das zweite und das dritte Verschlusselement 24, 34 ineinander ein.

In dem zweiten Kontaktbereich 44 ist eine Verbindung zwischen dem ersten und dem vierten Verschlusselement 26, 36 zweier identischer Verschlüsse 10 vorgesehen.

Solche identischen Verschlüsse 10 bzw. solche Profilleisten 20, 30 sind besonders kostengünstig als Meterware herstellbar, insbesondere aus Kunststoff extrudierbar.

An einer ersten Außenseite 28 der ersten Profilleiste 20 ist etwa zwischen dem ersten Kontaktbereich 42 und dem zweiten Kontaktbereich 44 ein Aktuator 50 ausgebildet. Der Aktuator 50 ist zum Umschalten aus einer geschlossenen Andockposition in eine geöffnete Andockposition betätigbar, wenn die Verschlüsse 10 miteinander verbunden sind, wie hier nicht dargestellt. Dazu wirkt der Aktuator 50 auf die entsprechenden Verschlusselemente 24, 34 des Verschlusses ein.

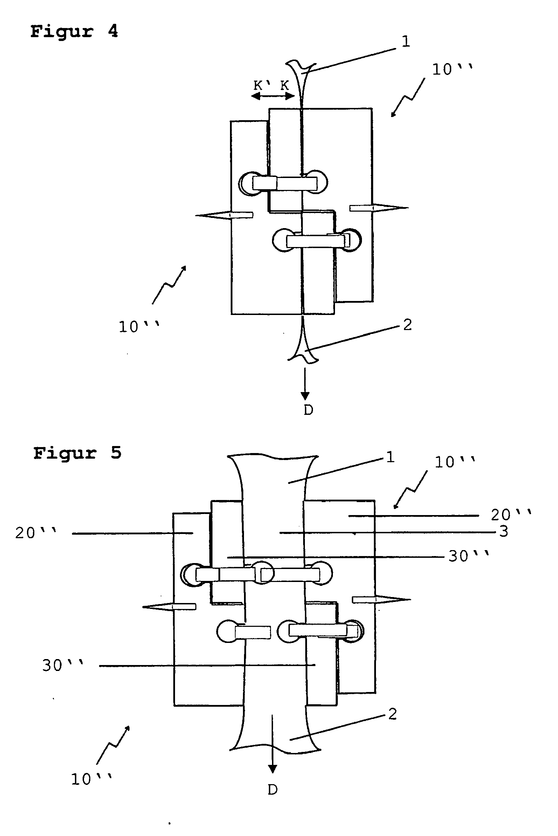

Die Figur 2 zeigt ein zweites Ausführungsbeispiel und Figur 3 ein drittes Ausführungsbeispiel erfindungsgemäßer Verschlüsse 10', 10". Hierbei sind gemäß Figur 2 die Profilleisten 20', 30' des Verschlusses 10' derart ausgebildet, dass sie, wenn miteinander verbunden, im Querschnitt gesehen, etwa ein Rechteck bilden. Gemäß Figur 3 ist alternativ für die erste Profilleiste 20" vorgesehen sein, dass sie in dem zweiten Kontaktbereich 44 schmaler als in dem ersten Kontaktbereich 42 ausgeführt ist, insbesondere mit einem Absatz. Das dritte Ausführungsbeispiel als Verschluss 10" ist neben der Figur 3 auch in den Figuren 4 und 5 in einer geschlossenen Andockposition (Figur 4) und einer geöffneten Andockposition (Figur 5) dargestellt.

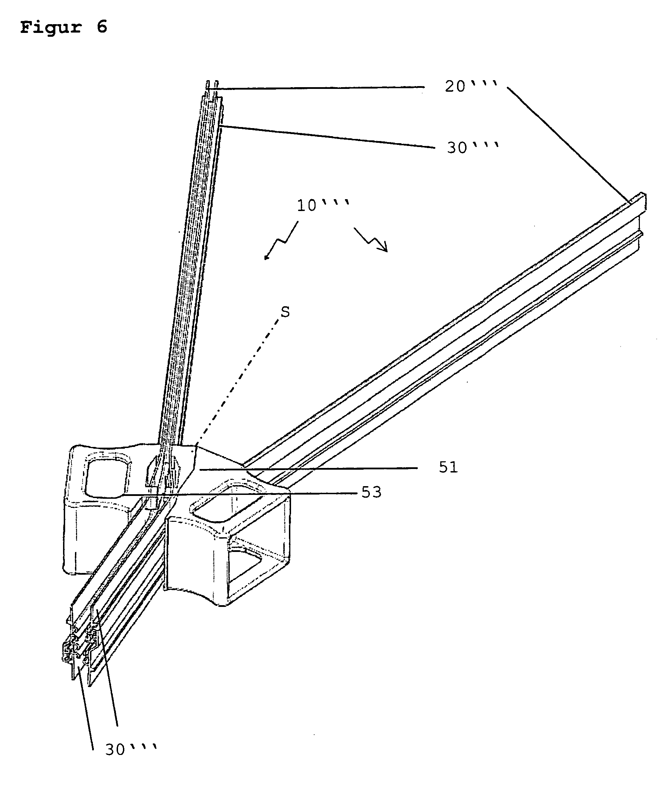

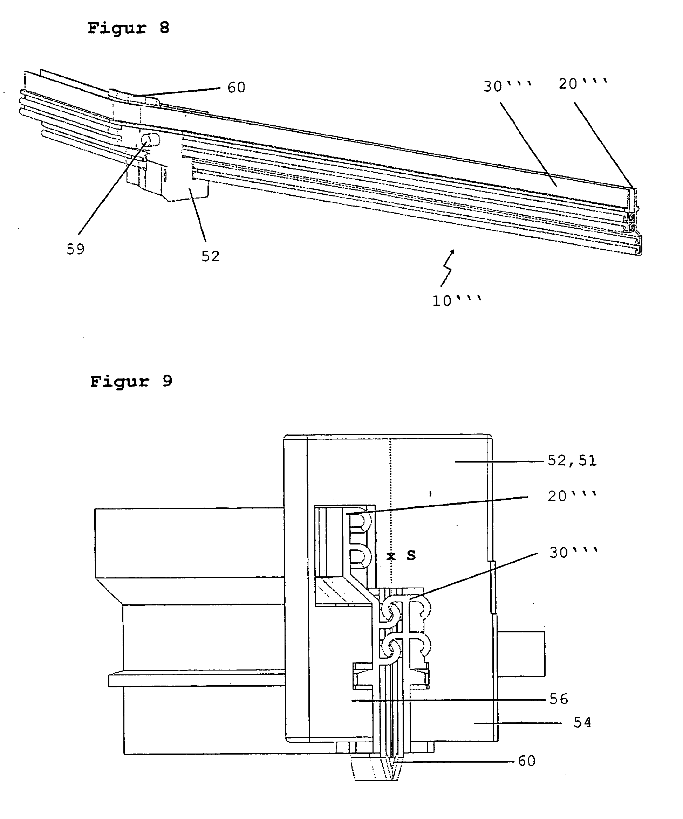

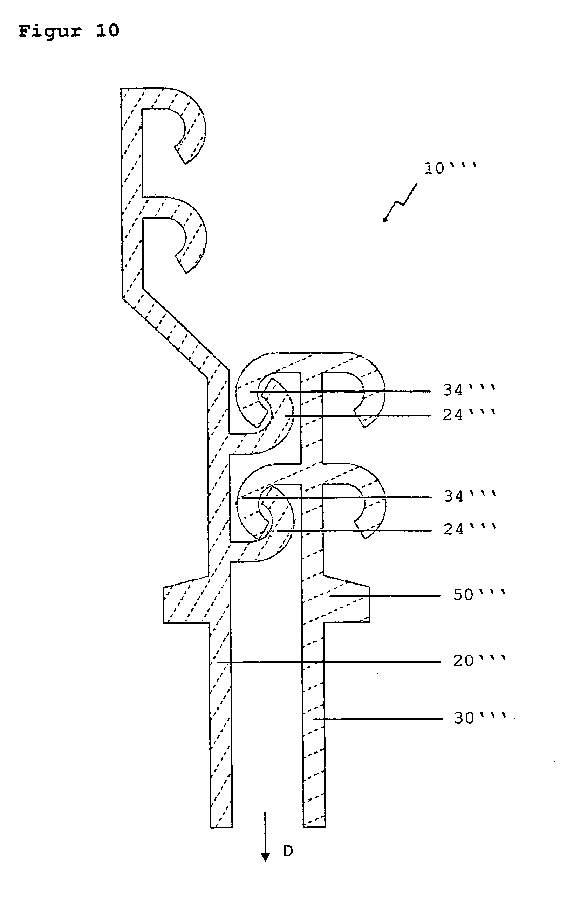

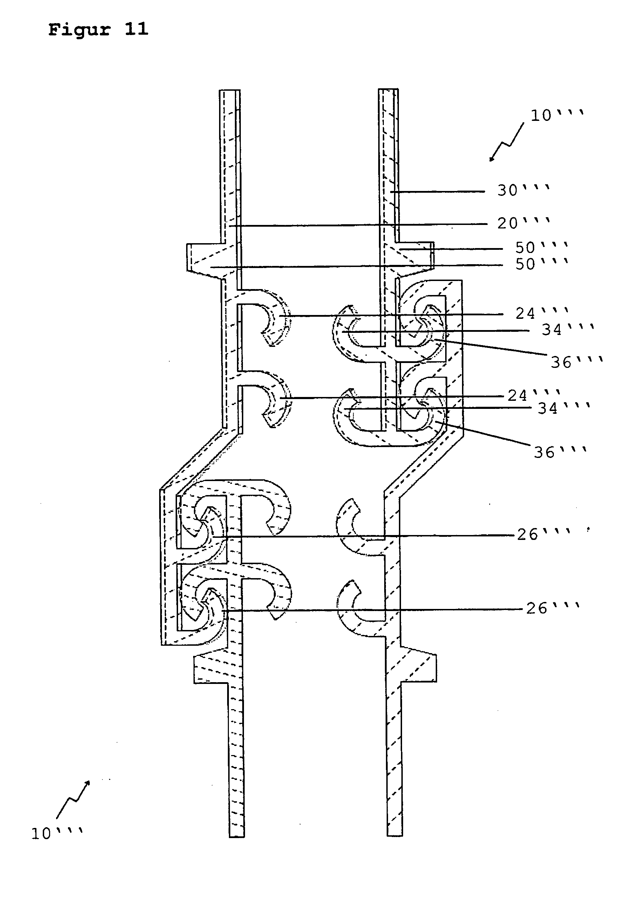

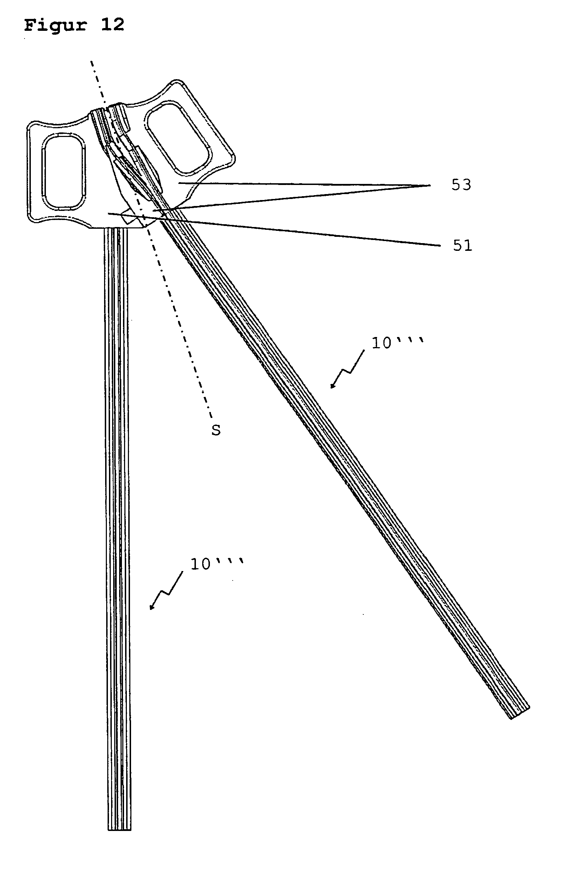

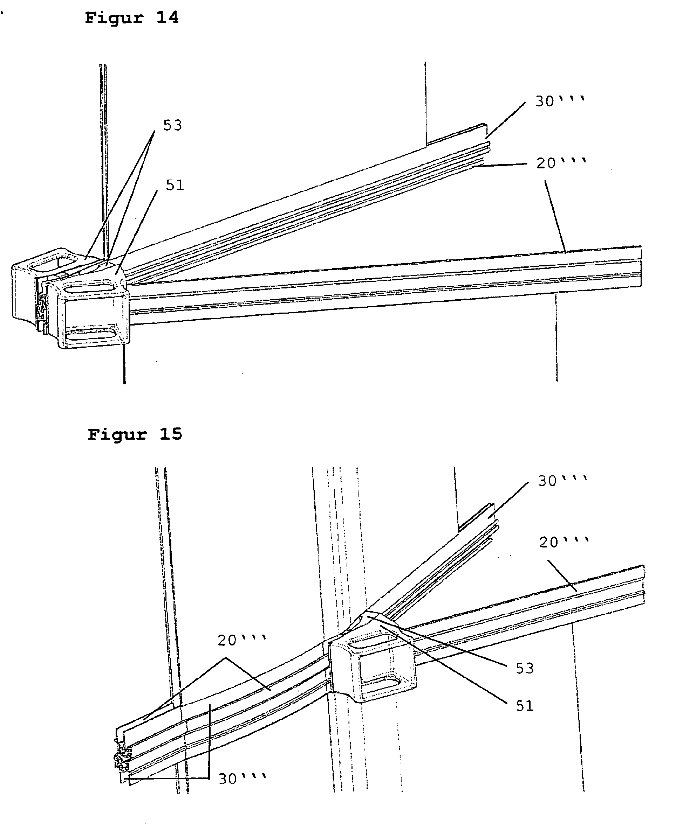

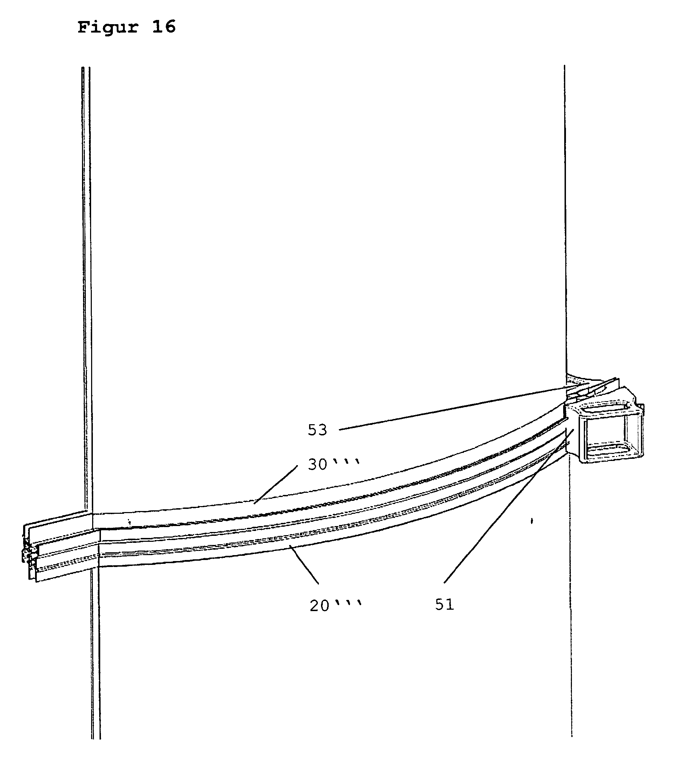

In den Figuren 6 bis 16 ist ein viertes Ausführungsbeispiel dargestellt. Die Figuren 10 und 11 stellen Schnitte durch einen Verschluss 10"' dar.

In Figur 10 ist ein Schnitt durch einen Verschluss 10"' dargestellt, der mit seinen Profilleisten 20"', 30"' verschlossen ist. Die Profilleisten 20"' und 30"' weisen einander abgewandt jeweils nach außen gerichtet, quer zur Durchflussrichtung D einen Aktuator 50"' auf, dessen Funktion - wie die übrigen Funktionen der Profilleisten 20"', 30"' auch - vergleichbar mit der Funktion gemäß den Ausführungsbeispielen 1 bis 3 ist. An den Profilleisten 20"' und 30"' sind einander zugewandt direkt Verschlusselemente 24"', 34"' angeordnet.

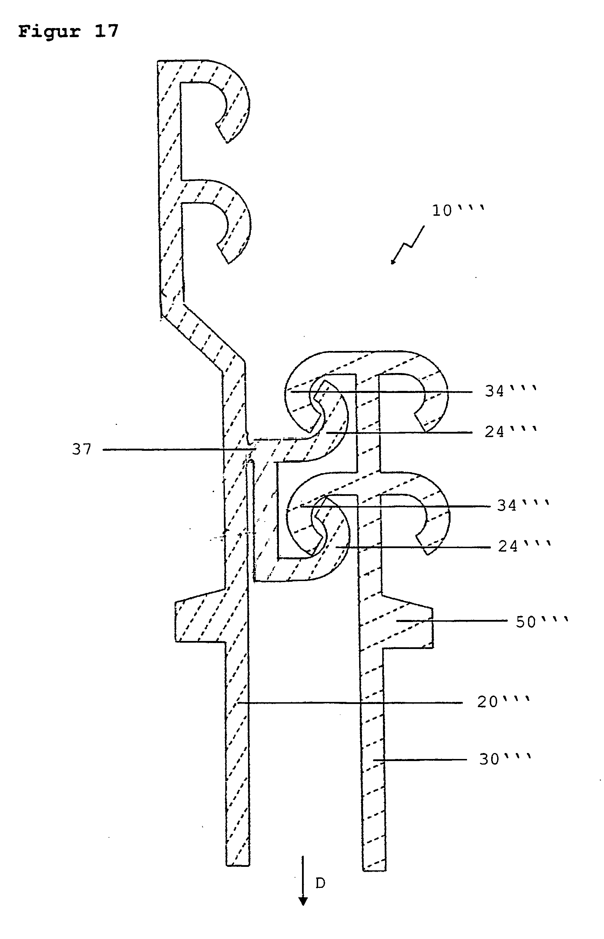

Eine Abwandlung dieser Ausführungsform ist in Figur 17 dargestellt. Parallel zu der ersten Profilleiste 20'" ist eine Nebenleiste über ein Filmscharnier 37 an der ersten Profilleiste 20"' befestigt. In dieser Abwandlung trägt nicht direkt die erste Profilleiste 20"' die Verschlusselemente 24"', sondern indirekt. Die Verschlusselemente 24"' sind nämlich an der Nebenleiste angeordnet. So ist auch in gefüllten Gebinden 1, 2 ein Abschälen der Verschlusselemente 24"', 34"' vermieden, wenn der Inhalt die Profilleisten 20'", 30"' gegeneinander verbiegt. Durch das Filmscharnier 37 sind die Verschlusselemente 24"', 34"' von der Profilleiste 20''' entkoppelt. Die Verschlussleisten 20"', 30"' können den Belastungen nachgeben, ohne dass sich die Verschlusselemente 24"', 34"' lösen.

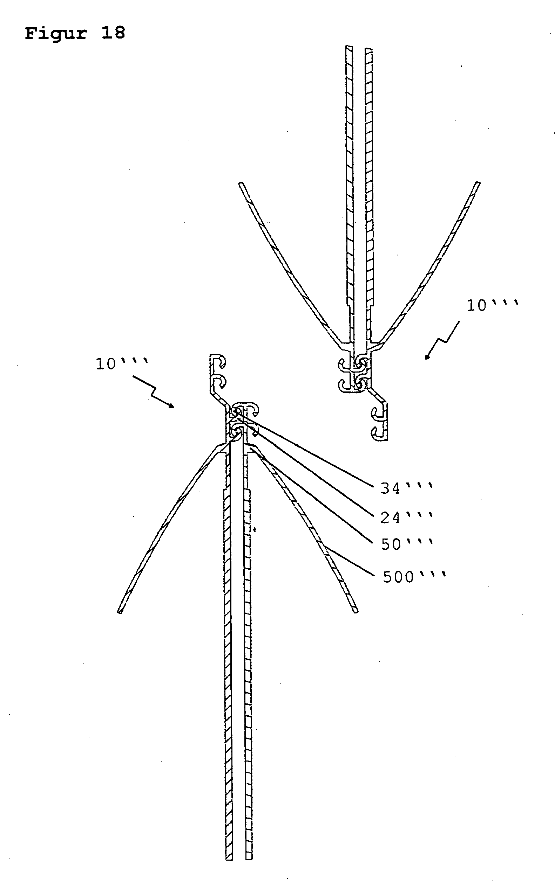

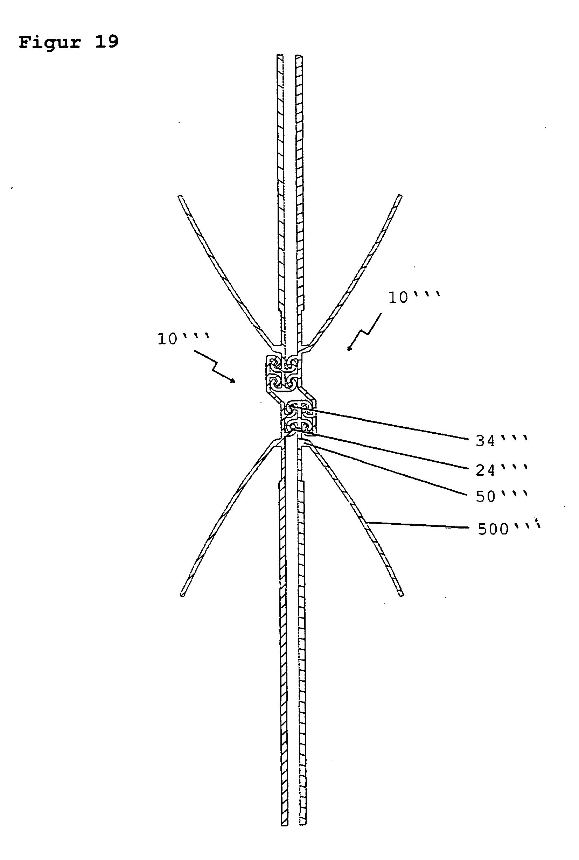

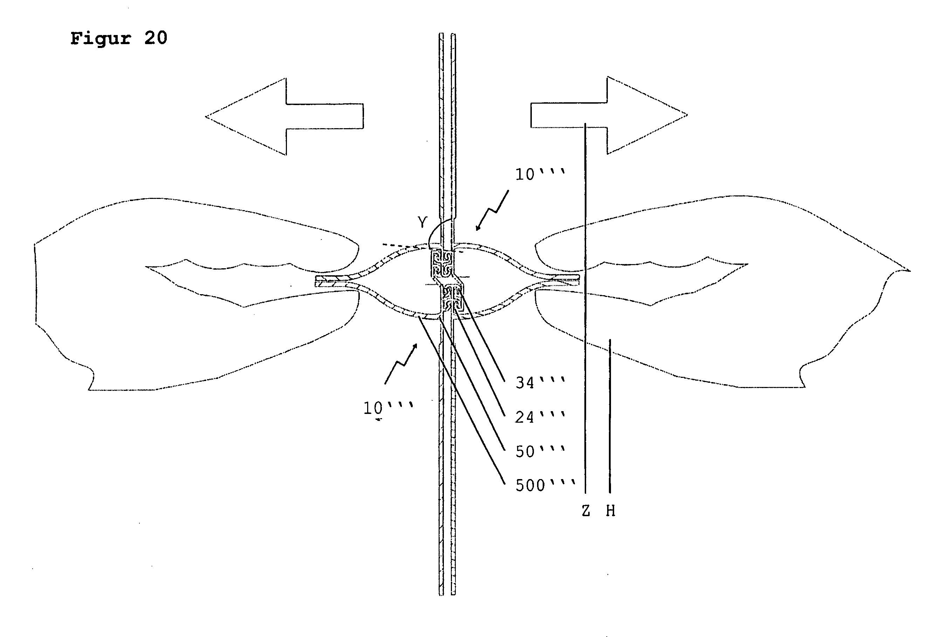

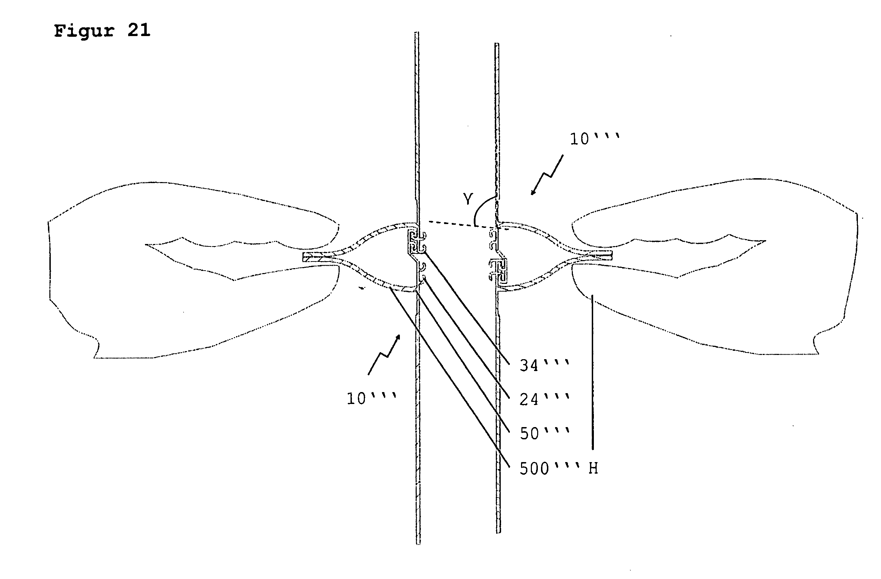

In den Figuren 18 bis 21 ist ein an den Aktuator 50'" angeschlossenes Griffelement 500'" dargestellt. Anders ausgedrückt ist der Aktuator als Griffelement 500'" ausgeführt. Das Griffelement 500'" kann wie in den Figuren 20 und 21 mit einer Hand H dargestellt von der Hand H gefasst werden. In der geschlossenen Andockposition (Fig. 19 u. 20) werden die Griffelemente 500'" der aneinander angedockten Verschlüsse 10"' auf beiden Seiten der hier nicht dargestellten Gebinde mit Händen H gegriffen und möglichst nahe an den Verschlüssen 10"' gegeneinander gezwungen.

Die damit einhergehende Auslenkung der Griffelemente 500" wirkt sich über den Aktuator 50"' vermittelt auf die Verschlusselemente 24"' und/oder 34"' aus. Die Verschlusselemente 24"' und/oder 34"' werden in einem Winkel γ ausgelenkt. Ob beide Verschlusselemente 24"' und 34"' oder nur eines der Verschlusselemente von dem jeweiligen Aktuator 50'" beeinflusst wird, hängt von dessen Funktionsweise ab. Wenn die Auslenkung eines der Verschlusselemente ausreicht, ist eine Auslenkung des jeweils gegenüberliegend eingreifenden Verschlusselements ggf. nicht erforderlich.

In Figur 20 ist mit Pfeilen angedeutet, dass durch die Hände H ein Zug in einer Zugrichtung Z auf die Griffelelemente 500'" ausgeübt wird, wenn sie aufeinander gedrückt sind. Die Auslenkung um den Winkel γ alleine reicht in einigen Ausführungsformen nicht aus, um ein Umschalten von der geschlossenen in die geöffnete Andockposition freizugeben. Erst durch den zusätzlichen Zug kommt es dann zu einer ausreichenden Freigabe der Verschlusselemente 24"', 34"'.

In Figur 11 befinden sich zwei Verschlüsse 10'" in einer geöffneten Andockposition zueinander. Dabei ist mit doppelter Linienführung die Auswirkung der Betätigung des Aktuators 50"' der Profilleisten 20"', 30"' dargestellt. Durch Betätigen des Aktuators 50"' können die an den Verschlussleisten 20"', 30"' angeordneten Verschlusselemente 24"', 26"', 34"', 36"', durch ein Abwinkeln bzw. Auslenken dargestellt, das Ineinandergreifen mit den gegenüberliegenden Verschlusselementen lösen.

In den Figuren 6 und 12 bis 16 ist das Zusammenwirken zweier Schieber 51, 53 für die Verschlüsse 10"' perspektivisch dargestellt. Dabei ist ein erster Schieber 51 auf einen teilweise geschlossenen Verschluss 10"' aufgeschoben und ein zweiter Schieber 53 auf einen zweiten Verschluss 10"'. Die Schieber 51, 53 sind miteinander verbunden und werden gemeinsam entlang einer Schiebeachse S auf den Profilleisten 20"', 30"' verschoben. Auf einer Seite der miteinander verbundenen Schieber 51, 53 befinden sich die Verschlüsse 10"' in einer geöffneten Andockposition, während die Verschlüsse 10"' der beiden miteinander zu verbindenden Gebinde auf der anderen Seite der Schieber 51, 53 seitlich zueinander und getrennt voneinander jeweils verschlossen vorliegen.

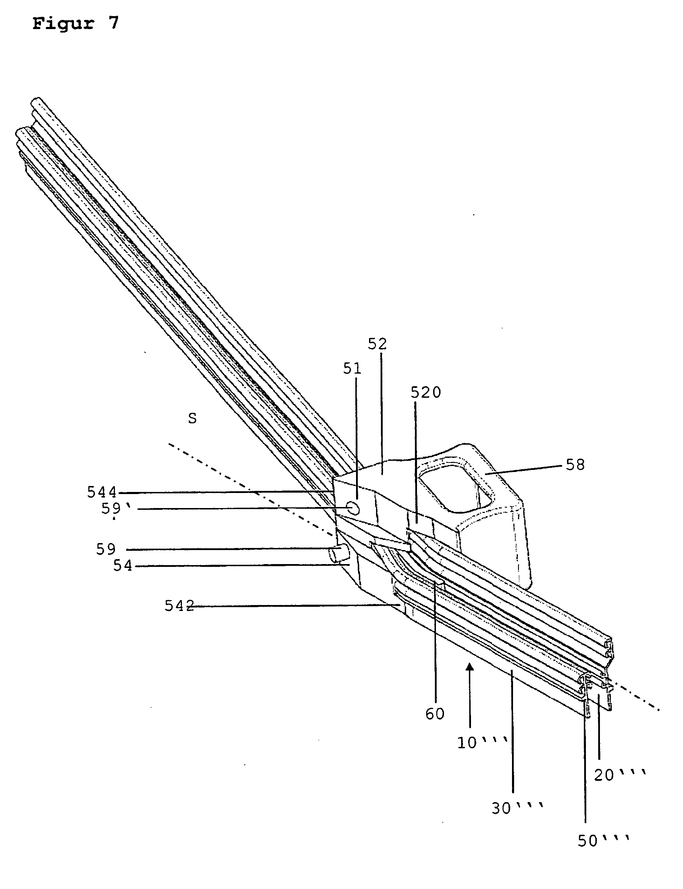

In den Figuren 7 bis 9 ist der Schieber 51 separat dargestellt, prinzipiell sind beide Schieber 51, 53 gleich ausgebildet, weshalb die Beschreibung zum Schieber 51 deckungsgleich auf den Schieber 53 zu übertragen ist.

Der Schieber 51 ist - im Querschnitt gesehen - U-förmig ausgebildet. Der Querschnitt des Schiebers 51 weist eine Basis 52 und zwei Schenkel 54, 56 auf. Im Inneren des U-förmigen Querschnittes wird der Verschluss 10"' aufgenommen.

Die Basis 52 ist den aufgenommenen Verschluss 10"' kreuzend mit einer Wand 520 ausgebildet, wobei die Wand 520 in einen ersten Schenkel 54 übergeht. Dabei überkreuzt die Wand 520 den Verschluss 10"' in Stufen mit unterschiedlicher Neigung gegenüber der Schiebeachse S. Der erste Schenkel 54 weist - entlang der Schiebeachse S gesehen - ein schmales Tauchende 542 und dem Tauchende 542 gegenüberliegend ein breites Kanalende 544 auf. Der Schieber 51 nimmt nicht miteinander verbundene Profilleisten 20"', 30"' zunächst lose auf. Dazu gleiten die Profilleisten 20"', 30"' in den Schieber 51 hinein und werden dort aneinander gedrückt.

Aus der Formgebung der Basis 52 ergibt sich ein in Richtung der Schiebeachse S kürzerer erster Schenkel 54 im Vergleich zu einem längeren zweiten Schenkel 56. Entlang der Stufen quer und auch parallel zur Schieberichtung S werden die Profilleisten 20"', 30"' von den Schenkeln 54, 56 geführt, sodass eine Verbindung zwischen den Profilleisten 20"', 30'" hergestellt werden kann oder bei Eintauchen der Klinge 60 getrennt werden kann.

Dem zweiten Schieber 53 zugewandt weist der erste Schenkel 54 des ersten Schiebers 51 ein Verbindungselement 59 und eine Verbindungselementaufnahme 59' auf. Das Verbindungselement 59 bzw. die Verbindungselementaufnahme 59' sorgen für eine definierte Ausrichtung der Schieber 51, 53 zueinander.

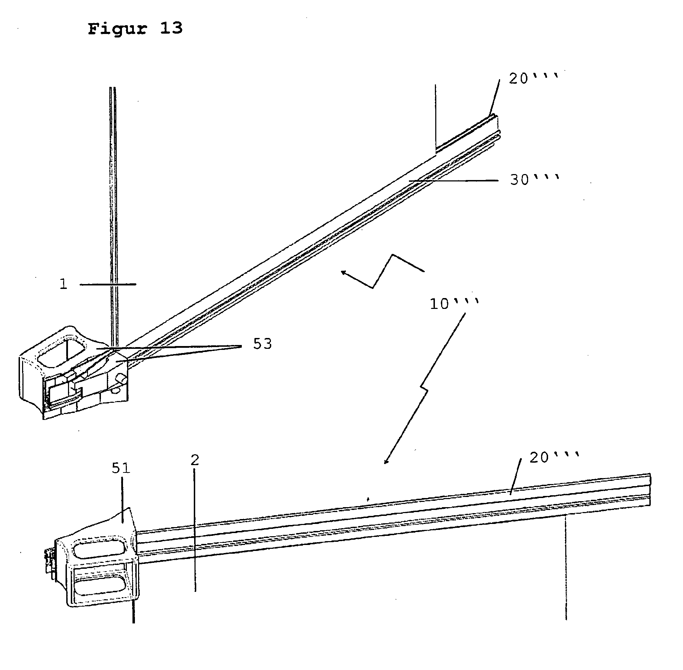

In den Figuren 13 bis 16 ist das Überführen von einer geschlossenen Andockposition in eine geöffnete Andockposition in perspektivischen Darstellungen verdeutlicht, wobei zusätzlich die miteinander zu verbindenden Gebinde 1 und 2 dargestellt sind. Auch hier sind zwei Schieber 51, 53 für das Umschalten miteinander verbunden. Alternativ könnte das gleiche Ergebnis auch ohne Verwendung der Schieber 51, 53 durch seitliches Ziehen bzw. Abwinkeln mit den Händen an den Aktuatoren 50"' erfolgen.

### Bezugszeichenliste

- 1: erstes Gebinde
- 2: zweites Gebinde
- 3: Kanal

- 10, 10', 10", 10"': Verschluss

- 20, 20', 20", 20"': erste Profilleiste
- 22: erste Innenseite
- 24, 24"': zweites Verschlusselement
- 26, 26"': erstes Verschlusselement
- 28: erste Außenseite
- 30, 30', 30", 30"': zweite Profilleiste
- 32: zweite Innenseite
- 34, 34"': drittes Verschlusselement
- 36, 36"': viertes Verschlusselement
- 37: Filmscharnier
- 38: zweite Außenseite
- 42: erster Kontaktbereich
- 44: zweiter Kontaktbereich
- 50, 50"': Aktuator
- 51: erster Schieber
- 52: Basis
- 53: zweiter Schieber
- 54: erster Schenkel
- 56: zweiter Schenkel
- 58: Griffabschnitt
- 59: Verbindungselement
- 59': Verbindungselementaufnahme
- 60: Klinge

- 500'": Griffelement
- 520: Wand
- 542: Tauchende
- 544: Kanalende

- γ: Auslenkungswinkel
- D: Durchflussrichtung
- H: Hand
- K: kanaleinwärts
- K': kanalauswärts
- S: Schiebeachse
- Z: Zugrichtung

## Patentansprüche

1. Verschluss (10, 10', 10", 10"') mit zwei Profilleisten (20, 20', 20'', 20"', 30, 30', 30", 30"') für ein mindestens teilweise flexibles Gebinde (1, 2)
- zum umweltdichten Verbinden eines ersten Gebindes (1) mit einem zweiten Gebinde (2) in einer geschlossenen Andockposition und
- zum umweltdichten Führen eines Durchflusses in einer Durchflussrichtung (D) durch den Verschluss (10, 10', 10", 10"') von dem ersten Gebinde (1) in das zweite Gebinde (2) hinein in einer geöffneten Andockposition, wobei
1.1. das zweite Gebinde (2) dem ersten Gebinde (1) zugewandt einen identischen Verschluss (10, 10', 10", 10"') aufweist, der in der geöffneten Andockposition im Eingriff mit dem Verschluss (10, 10', 10", 10"') des ersten Gebindes (1) steht und gemeinsam mit dem Verschluss (10, 10', 10", 10"') des ersten Gebindes (1) einen Kanal (3) für den Durchfluss in der Durchflussrichtung (D) ausbildet, wobei
1.2.1. die Profilleisten (20, 20', 20", 20"', 30, 30', 30", 30"') einander gegenüber angeordnet das jeweilige Gebinde (1, 2) zwischen sich aufnehmend verschließen, und wobei
1.2.2. eine erste Profilleiste (20, 20', 20", 20"') auf einer dem jeweiligen Gebinde (1, 2) zugewandten ersten Innenseite (22) mit mindestens einem ersten und einem zweiten Verschlusselement (24, 26) ausgebildet ist, und
1.2.3. eine zweite Profilleiste (30, 30', 30", 30"') auf einer dem jeweiligen Gebinde (1, 2) zugewandten zweiten Innenseite (32) mit mindestens einem dritten Verschlusselement (34) ausgebildet ist, wobei das mindestens eine dritte Verschlusselement (34) quer zu der Durchflussrichtung (D) kanaleinwärts (K) ausgerichtet angeordnet ist, und auf einer dem jeweiligen Gebinde (1, 2) abgewandten Außenseite (38) mit mindestens einem vierten Verschlusselement (36) ausgebildet ist, wobei das mindestens eine vierte Verschlusselement ausschließlich quer zu der Durchflussrichtung (D) kanalauswärts (K') ausgerichtet angeordnet ist,
**dadurch gekennzeichnet, dass**
1.3 sämtliche Verschlusselemente (24, 26) ausschließlich quer zu der Durchflussrichtung (D) kanaleinwärts (K) ausgerichtet angeordnet sind und
1.4 die erste Profilleiste (20, 20', 20", 20"') sich in der Durchflussrichtung (D) über das jeweilige Gebinde (1, 2) hinaus erstreckt und
1.4.1 die Innenseite (22) der ersten Profilleiste (20, 20', 20", 20"') in der Durchflussrichtung (D) einen ersten Kontaktbereich (42) und einen zweiten Kontaktbereich (44) aufweist, und dass
1.4.2 das zweite und das dritte Verschlusselement (24, 34) das erste Gebinde (1) in dem ersten Kontaktbereicht (42) verschließen, in dem das zweite Verschlusselement (24) und das dritte Verschlusselement (34) ineinandergreifen,
1.5 der zweite Kontaktbereich (44) sich über das erste Gebinde (1) und die gegenüberliegende zweite Profilleiste (30, 30', 30", 30"') hinaus erstreckt und dass
1.5.1 der Verschluss (10, 10', 10", 10"') des ersten Gebindes (1) in dem zweiten Kontaktbereich (44) mit dem identischen Verschluss (10, 10', 10", 10"') des zweiten Gebindes (2) verbindbar ist, indem
1.5.2 das erste Verschlusselement (26) des Verschlusses (10, 10', 10", 10"') und das vierte Verschlusselement (36) des identischen Verschlusses (10, 10', 10", 10"') ineinandergreifen.

2. Verschluss nach Anspruch 1,
**dadurch gekennzeichnet, dass** die Innenseiten (22, 32) und die Außenseite (38) als Kontaktflächen insbesondere kongruent zueinander ausgebildet sind.

3. Verschluss nach einem der Ansprüche 1 oder 2,
**dadurch gekennzeichnet, dass** die Verschlusselemente (24, 26, 34, 36) in der Art einer Nut-Feder-Verbindung oder einer Verhakungsverbindung ineinandergreifen.

4. Verschluss nach einem der vorangehenden Ansprüche,
**dadurch gekennzeichnet, dass** der Verschluss mindestens einen Aktuator (50, 50"') aufweist, der zum Überführen des Verschlusses (10, 10', 10", 10"') von der geschlossenen Andockposition in die geöffnete Andockposition geeignet und der von außen betätigbar ausgebildet ist.

5. Verschluss nach Anspruch 4,
**dadurch gekennzeichnet, dass** der Aktuator (50, 50"') eine Bewegung mindestens eines der Verschlusselemente (24, 26, 34, 36) bewirkt, sodass das Ineinandergreifen in ein weiteres der Verschlusselemente (24, 26, 34, 36) gelöst ist.

6. Verschluss nach einem der Ansprüche 4 oder 5,
**dadurch gekennzeichnet, dass** der Aktuator (50, 50"') eine Bewegung des zweiten Verschlusselements (24) oder des dritten Verschlusselements (34) bewirkt, sodass das Ineinandergreifen in das jeweils zugeordnete Verschlusselement (24, 34) gelöst ist, während das Ineinandergreifen des ersten Verschlusselements (26) des Verschlusses (10, 10', 10", 10"') in das vierte Verschlusselement (36) des identischen Verschlusses (10, 10', 10", 10"') bestehen bleibt.

7. Verschluss nach einem der Ansprüche 4 bis 6,
**dadurch gekennzeichnet, dass** der Aktuator (50, 50"') mit einem Schieber (51, 53) betätigbar ausgebildet ist, wobei der Schieber (51, 53) über die Breite der Gebinde (1, 2) hinweg quer zu der Durchflussrichtung (D) auf den Profilleisten (20, 20', 20", 20"', 30, 30', 30", 30"') verschiebbar ist.

8. Schieber (51, 53) für einen Verschluss (10, 10', 10", 10"') eines ersten mindestens teilweise flexiblen Gebindes (1) nach einem der vorangehenden Ansprüche, der geeignet ist, das jeweilige Gebinde (1, 2) zu verschließen und mit einem gleich ausgebildeten Schieber (51, 53) zwei Gebinde (1, 2) mit ihren Verschlüssen (10, 10', 10", 10"') seitlich miteinander zu verbinden, aufweisend:
- einen U-förmigen Querschnitt mit einer Basis (52) und zwei Schenkeln (54, 56), wobei ein erster Schenkel (54) dem zweiten Gebinde (2) abgewandt mit einem Griffabschnitt (58) und ein zweiter Schenkel (56) dem zweiten Gebinde (2) zugewandt mit einem Verbindungselement (59) und einer Verbindungselementaufnahme (59') ausgebildet sind, die für eine definierte Ausrichtung des Schiebers (51) und eines gleich ausgebildeten Schiebers (51, 53) zueinander sorgen,
- eine Schiebeachse (S), die etwa senkrecht zu dem U-förmigen Querschnitt in der Richtung durch den Schieber (51, 53) verläuft, entlang welcher der Schieber (51, 53) auf den Profilleisten (20, 20', 20", 20"', 30, 30', 30", 30"') verschiebbar ist, und
- eine Klinge (60), die etwa parallel zur Schiebeachse (5) zwischen den Schenkeln (54, 56) an der Basis (52) angeordnet ist.

9. Schieber (51, 53) nach Anspruch 8,
**dadurch gekennzeichnet, dass** der erste Schenkel (54) ein entlang der Schiebeachse (S) ausgerichtetes, schmales Tauchende (542) und ein breites Kanalende (544) aufweist.

10. Schieber (51, 53) nach einem der Ansprüche 8 oder 9,
**dadurch gekennzeichnet,** das die Basis (52) einseitig, dem Griffabschnitt (58) abgewandt schräg zur Schiebeachse (S) mit einer stufenförmigen Wand (520) ausgebildet ist, die in den ersten Schenkel (54) übergeht, sodass der erste Schenkel (54) in Richtung der Schiebeachse (S) kürzer ist als der zweite Schenkel (56).

11. Schieber (51, 53) nach einem der Ansprüche 8 bis 10,
**dadurch gekennzeichnet,** das der Schieber (51, 53) ein Messer aufweist, insbesondere an der Klinge (60).

12. Verfahren
- zum umweltdichten Verbinden eines ersten Gebindes (1) mit einem zweiten Gebinde (2) in einer geschlossenen Andockposition und
- zum umweltdichten Führen eines Durchflusses in einer Durchflussrichtung (D) durch den Verschluss (10, 10', 10", 10"') von dem ersten Gebinde (1) in das zweite Gebinde (2) hinein in einer geöffneten Andockposition ist,
aufweisend mindestens die Verfahrensschritte:
a. Verschließen der Gebinde (1, 2) mit je einem Verschluss (10, 10', 10", 10"') gemäß Anspruch 1,
b. Verbinden der Verschlüsse (10, 10', 10", 10"') durch seitlichen Druck der Verschlüsse (10, 10', 10", 10"') aneinander, sodass entsprechende Verschlusselemente (24, 24"', 26, 26"', 34, 34"', 36, 36"') ineinander greifen, und
c. Betätigen des Aktuators (50, 50"') zum Umschalten von der geschlossenen Andockposition in die geöffnete Andockposition.

## Claims

1. A closure (10, 10', 10", 10"') having two profile strips (20, 20', 20", 20"', 30, 30', 30", 30"') for an at least partially flexible receptacle (1, 2)
- for the environmentally sealed connection of a first receptacle (1) to a second receptacle (2) in a closed docking position and
- for the environmentally sealed guidance of a throughflow in a throughflow direction (D) through the closure (10, 10', 10", 10"') from the first receptacle (1) into the second receptacle (2) in an opened docking position,
1.1 the second receptacle (2) having an identical closure (10, 10', 10", 10"') facing the first receptacle (1), said identical closure (10, 10', 10", 10"') being engaged with the closure (10, 10', 10", 10"') of the first receptacle (1) in the opened docking position, and together with the closure (10, 10', 10", 10"') of the first receptacle (1) forming a channel (3) for the throughflow in the throughflow direction (D),
1.2.1 the profile strips (20, 20, 20", 20"', 30, 30', 30", 30"') arranged opposite one another closing the respective receptacle (1, 2) held between one another, and
1.2.2 a first profile strip (20, 20', 20", 20"') being formed on a first inner side (22) which faces the respective receptacle (1, 2), with at least one first and one second closure element (24, 26), and
1.2.3 a second profile strip (30, 30', 30", 30'") being formed on a second inner side (32), which faces the respective receptacle (1, 2), with at least one third closure element (34), the at least one third closure element (34) being arranged oriented transversely to the throughflow direction (D) and in the inward direction with respect to the channel (K), and being formed with at least one fourth closure element (36) on an outer side (38), which faces away from the respective receptacle (1, 2), the at least one fourth closure element being arranged oriented exclusively transversely to the throughflow direction (D) in the outward direction with respect to the channel (K'),
**characterised in that**
1.3 all of the closure elements (24, 26) are arranged oriented exclusively transversely to the throughflow direction (D) in the inward direction with respect to the channel (K), and
1.4 the first profile strip (20, 20', 20", 20") extends in the throughflow direction (D) beyond the respective receptacle (1, 2), and
1.4.1 the inner side (22) of the first profile strip (20, 20', 20", 20"') has in the throughflow direction (D) a first contact region (42) and a second contact region (44), and that
1.4.2 the second and the third closure element (24, 34) close the first receptacle (1) in the first contact region (42) in which the second closure element (24) and the third closure element (34) engage in one another,
1.5 the second contact region (44) extends beyond the first receptacle (1) and the opposite second profile strip (30, 30', 30", 30'"), and that
1.5.1 the closure (10, 10', 10", 10"') of the first receptacle (1) can be connected in the second contact region (44) to the identical closure (10, 10', 10", 10'") of the second receptacle (2),
1.5.2 the first closure element (26) of the closure (10, 10', 10", 10"') and the fourth closure element (36) of the identical closure (10, 10', 10", 10"') engaging in one another.

2. The closure according to Claim 1,
**characterised in that** the inner sides (22, 32) and the outer side (38) are formed as contact surfaces, in particular congruently to one another.

3. The closure according to either of Claims 1 or 2,
**characterised in that** the closure elements (24, 26, 34, 36) engage in one another in the manner of a groove-spring connection or a hooking connection.

4. The closure according to any of the preceding claims,
**characterised in that** the closure has at least one actuator (50, 50"') which is suitable for transferring the closure (10, 10', 10", 10'") from the closed docking position into the opened docking position and which is formed such that it can be actuated from outside.

5. The closure according to Claim 4,
**characterised in that** the actuator (50, 50"') causes at least one of the closure elements (24, 26, 34, 36) to move so that the engagement thereof in another of the closure elements (24, 26, 34, 36) is released.

6. The closure according to either of Claims 4 or 5,
**characterised in that** the actuator (50, 50"') causes the second closure element (24) or the third closure element (34) to move so that the engagement thereof in the respective associated closure element (24, 34) is released while the engagement of the first closure element (26) of the closure (10, 10', 10", 10'") in the fourth closure element (36) of the identical closure (10, 10', 10", 10'") remains intact.

7. The closure according to any of Claims 4 to 6,
**characterised in that** the actuator (50, 50"') is formed such that it can be actuated by a slide (51, 53), the slide (51, 53) being able to be moved away on the profile strips (20, 20', 20", 20"', 30, 30', 30", 30"') over the width of the receptacles (1, 2) transversely to the throughflow direction (D).

8. A slide (51, 53) for a closure (10, 10', 10", 10"') of a first at least partially flexible receptacle (1) according to any of the preceding claims, which slide is suitable for closing the respective receptacle (1, 2), and for connecting two receptacles (1, 2) laterally to one another by means of their closures (10, 10', 10", 10'") and with an identically formed slide (51, 53), having:
- a U-shaped cross section with a base (52) and two limbs (54, 56), a first limb (54), which faces away from the second receptacle (2), being formed with a gripping portion (58), and a second limb (56), which faces the second receptacle (2), being formed with a connecting element (59) and a connecting element holder (59') which ensure that the slide (51) and an identically formed slide (51 53) are oriented in a defined manner with respect to one another,
- a sliding axis (S) which extends approximately perpendicularly to the U-shaped cross section in the direction through the slide (51, 53) in which the slide (51, 53) can be moved on the profile strips (20, 20', 20", 20"', 30, 30', 30", 30"'), and
- a blade (6) which is arranged on the base (52) between the limbs (54, 56) and approximately parallel to the sliding axis (5).

9. The slide (51, 53) according to Claim 8,
**characterised in that** the first limb (54) has, oriented along the sliding axis (S), a narrow insertion end (542) and a wide channel end (544).

10. The slide (51, 53) according to either of Claims 8 or 9,
**characterised in that** on one side the base (52), which faces away from the gripping portion (58), is formed, obliquely with respect to the sliding axis (S) with a step-like wall (520) which merges into the first limb (54) so that the first limb (54) is shorter in the direction of the sliding axis (S) than the second limb (56).

11. The slide (51, 53) according to any of Claims 8 to 10,
**characterised in that** the slide (51, 53) has a cutter, in particular on the blade (60).

12. A method
- for the environmentally sealed connection of a first receptacle (1) to a second receptacle (2) in a closed docking position and
- for the environmentally sealed guidance of a throughflow in a throughflow direction (D) through the closure (10, 10', 10", 10"') from the first receptacle (1) into the second receptacle (2) in an opened docking position,
having at least the method steps of:
a. closing the receptacles (1, 2) by means of a respective closure (10, 10', 10", 10"') according to Claim 1,
b. connecting the closures (10, 10', 10", 10"') by laterally pushing the closures (10, 10', 10", 10"') together so that corresponding closure elements (24, 24"', 26, 26"', 34, 34"', 36, 36"') engage in one another, and
c. actuating an actuator (50, 50"') to switch from the closed docking position into the opened docking position.

## Revendications

1. Fermeture (10, 10', 10", 10"') ayant deux réglettes (20, 20', 20", 20"', 30, 30', 30"', 30"') profilées pour un emballage (1, 2) souple, au moins en partie,
- pour la liaison étanche vis-à-vis de l'atmosphère ambiante d'un premier emballage (1) avec un deuxième emballage (2) en une position d'accouplement fermé et
- pour la conduite étanche vis-à-vis de l'atmosphère ambiante d'une circulation dans un sens (D) de circulation dans la fermeture (10, 10', 10", 10"') du premier emballage (1) au deuxième emballage (2) dans une position d'accouplement ouverte, dans laquelle
1.1. le deuxième emballage (2) a, tournée vers le premier emballage (1), une fermeture (10, 10', 10", 10"') identique, qui, dans la position d'accouplement ouverte, est en prise avec la fermeture (10, 10', 10", 10"') du premier emballage (1) et forme, conjointement avec la fermeture (10, 10', 10", 10"') du premier emballage (1), un canal (3) pour la circulation dans le sens (D) de circulation, dans laquelle
1.2.1. les réglettes (20, 20', 20", 20"', 30, 30', 30", 30"') profilées disposées l'une face à l'autre, ferment, en le contenant, l'emballage (1, 2) respectif, et dans laquelle
1.2.2. une première réglette (20, 20', 20", 20"') profilée est constituée d'un premier côté (22) intérieur tourné vers l'emballage (1, 2) respectif, au moins par un premier et un deuxième éléments (24, 26) de fermeture, et
1.2.3. une deuxième réglette (30, 30', 30", 30"') profilée est constituée d'un deuxième côté (32) intérieur tourné vers l'emballage (1, 2) respectif, au moins par un troisième élément (34) de fermeture, le au moins un troisième élément (34) de fermeture étant, transversalement au sens (D) de circulation, dirigé vers l'intérieur (K) du canal et, d'un côté (38) extérieur éloigné de l'emballage (1, 2) respectif, constitué en ayant au moins un quatrième élément (36) de fermeture, le au moins un quatrième élément de fermeture étant, exclusivement transversalement au sens (D) de circulation, dirigé vers l'extérieur (K') du canal, **caractérisée en ce que**
1.3. tous les éléments (24, 26) de fermeture sont, exclusivement transversalement au sens (D) de circulation, dirigés vers l'intérieur (K) du canal et
1.4. la première réglette (20, 20', 20", 20"') profilée s'étend dans le sens (D) de circulation au-delà de l'emballage (1, 2) respectif et
1.4.1. le côté (22) intérieur de la première réglette (20, 20', 20'', 20"') profilée a dans le sens (D) de circulation une première partie (42) de contact et une deuxième partie (44) de contact, et **en ce que**
1.4.2. le deuxième et le troisième éléments (24, 34) de fermeture ferment le premier emballage (1) dans la partie (42) de contact, dans laquelle le deuxième élément (24) de fermeture et le troisième élément (34) de fermeture s'interpénètrent,
1.5. la deuxième partie (44) de contact s'étend au-delà du premier emballage (1) et de la deuxième réglette (30, 30', 30'', 30'") profilée opposée et **en ce que**
1.5.1. la fermeture (10, 10', 10", 10"') du premier emballage (1) peut être reliée dans la deuxième partie (44) de contact avec la fermeture (10, 10', 10", 10"') identique du deuxième emballage (2) en
1.5.2. faisant s'interpénétrer le premier élément (26) de fermeture de la fermeture (10, 10', 10'', 10"') et le quatrième élément (36) de fermeture de la fermeture (10, 10', 10", 10"') identique.

2. Fermeture suivant la revendication 1,
**caractérisée en ce que**
les côtés (22, 32) intérieurs et le côté (38) extérieur sont constitués sous la forme de surfaces de contact, notamment congruentes entre elles.

3. Fermeture suivant l'une des revendications 1 ou 2,
**caractérisée en ce que**
les éléments (24, 26, 34, 36) de fermeture s'interpénètrent à la façon d'une languette et d'une rainure ou d'une liaison d'accrochage.

4. Fermeture suivant l'une des revendications précédentes,
**caractérisée en ce que**
la fermeture a au moins un actionneur (50, 50"'), qui est approprié pour faire passer la fermeture (10, 10', 10", 10''') de la position d'accouplement fermée à la position d'accouplement ouverte et qui peut être actionné de l'extérieur.

5. Fermeture suivant la revendication 4,
**caractérisée en ce que**
l'actionneur (50, 50"') provoque un déplacement d'au moins l'un des éléments (24, 26, 34, 36) de fermeture, de manière à faire cesser l'interpénétration dans un autre des éléments (24, 26, 34, 36) de fermeture.

6. Fermeture suivant l'une des revendications 4 ou 5,
**caractérisée en ce que**
l'actionneur (50, 50"') provoque un déplacement du deuxième élément (24) de fermeture ou du troisième élément (34) de fermeture, de manière à faire cesser l'interpénétration dans l'élément (24, 34) de fermeture associé respectivement, tandis que l'interpénétration du premier élément (26) de fermeture de la fermeture (10, 10', 10", 10"') dans le quatrième élément (36) de fermeture de la fermeture (10, 10', 10", 10"') identique reste conservée.

7. Fermeture suivant l'une des revendications 4 à 6,
**caractérisée en ce que** l'actionneur (50, 50"') est constitué de manière à pouvoir être actionné par un coulisseau (51, 53), le coulisseau (51, 53) pouvant, sur la largeur des emballages (1, 2) transversalement au sens (D) de circulation, coulisser sur les réglettes (20, 20', 20'', 20''', 30, 30', 30'', 30"') profilées.

8. Coulisseau (51, 53) pour une fermeture (10, 10', 10", 10"') d'un premier emballage (1) souple, au moins en partie, suivant l'une des revendications précédentes, qui est approprié pour fermer l'emballage (1, 2) respectif et pour relier latéralement entre eux, par un coulisseau (51, 53) constitué pareillement, deux emballages (1, 2) par leur fermeture (10, 10', 10", 10"') ayant :
- une section transversale en forme de U ayant une base (52) et deux branches (54, 56), une première branche (54), éloignée du deuxième emballage (2), étant constituée en ayant une partie (58) de préhension et une deuxième branche (56), tournée vers le deuxième emballage (2), étant constituée en ayant un élément (59) de liaison et un logement (59') de l'élément de liaison, qui servent à une orientation définie du coulisseau (51, 53), et d'un coulisseau (51, 53) constitué pareillement l'un par rapport à l'autre,
- un axe (S) de coulissement, qui s'étend dans la direction traversant le coulisseau (51, 53) à peu près perpendiculairement à la section transversale en forme de U, et le long duquel le coulisseau (51, 53) peut coulisser sur les réglettes (20, 20', 20'', 20"', 30, 30', 30'', 30"') profilées, et
- une lame (60), qui est disposée sur la base (52) entre les branches (54, 56) à peu près parallèlement à l'axe (5) de coulissement.

9. Coulisseau (51, 53) suivant la revendication 8,
**caractérisé en ce que**
la première branche (54) a une extrémité (542) plongeuse étroite, dirigée suivant l'axe (S) de coulissement, et une extrémité (544) large de canal.

10. Coulisseau (51, 53) suivant l'une des revendications 8 ou 9,
**caractérisé en ce que**
la base (52) est constituée d'un côté, en ayant une paroi (520) en forme de gradin, éloignée de la partie (58) de préhension, inclinée par rapport à l'axe (S) de coulissement et se transformant en la première branche (54), de sorte que la première branche (54) est plus courte dans la direction de l'axe (S) de coulissement que la deuxième branche (56).

11. Coulisseau (51, 53) suivant l'une des revendications 8 ou 10,
**caractérisé en ce que**
le coulisseau (51, 53) a un couteau, notamment sur la lame (60).

12. Procédé
- pour relier, d'une manière étanche à l'atmosphère ambiante, un premier emballage (1) à un deuxième emballage (2) dans une position d'accouplement fermée et
- pour conduire, d'une manière étanche à l'atmosphère ambiante, une circulation dans un sens (D) de circulation dans la fermeture (10, 10', 10'', 10''') du premier emballage (1) au deuxième emballage (2) dans une position d'accouplement ouverte,
comprenant au moins les stades de procédé :
a. fermeture des emballages (1, 2) par respectivement une fermeture (10, 10', 10'', 10"') suivant la revendication 1,
b. liaison des fermetures (10, 10', 10", 10"') en pressant latéralement les fermetures (10, 10', 10", 10"') l'une sur l'autre, de manière à ce que des éléments (24, 24"', 26, 26"', 34, 34"', 36, 36"') de fermeture correspondants s'interpénètrent, et
c. actionnement de l'actionneur (50, 50"') pour passer de la position d'accouplement fermée à la position d'accouplement ouverte.
